# EUROPEAN PATENT APPLICATION

(11) **EP 4 206 039 A1**
(43) Date of publication of application: **05.07.2023**
(21) Application number: 22216374.3
(22) Date of filing: 23.12.2022
(51) Int. Cl.: B60R 3/02

(54) **FOLDING LADDER FOR ROAD VEHICLES, IN PARTICULAR INDUSTRIAL VEHICLES AND COMMERCIAL VEHICLES**

(30) Priority: 03.01.2022 IT 202200000032
(71) Applicant: RECO s.r.l., 23875 Osnago (LC) (IT)
(72) Inventor: Redaelli, Guido, I-23875 Osnago (LC) (IT); Galletti, Davide Gianni Mario, I-23875 Osnago (LC) (IT)
(74) Representative: Mati, Silvia

(57) **Abstract**

The present invention relates to a folding ladder (10) for road vehicles, in particular industrial vehicles and commercial vehicles, comprising a plurality of foot support elements (13,14,15), the plurality of foot support elements (13,14,15) comprising at least one substantially flat upper support platform (13) and a support frame (14) of at least one step (15), the support platform (13) and the support frame (14) being movable with respect to each other between a folded configuration, in which the support platform (13) and the frame (14) are arranged substantially coplanar, and an extended configuration, in which the support platform (13) and the support frame (14) are comprised in respective inclined planes with respect to each other, and a containment structure (11,12',12") configured to be constrained below to a support chassis (52) of a bed (51) of a road vehicle (50) and to house the plurality of foot support elements (13,14,15), when these are in the folded configuration, and is characterised in that it comprises at least one prop element (18) constrained to at least a first foot support element (13,14,15) and at least a second foot support element (13,14,15), such that the at least one prop element (18) is configured to assume a first arrangement substantially coplanar to the foot support elements (13,14,15), when the support platform (13) and the support frame (14) are in the folded configuration, and an arrangement inclined and/or incident with respect to both planes in which the support platform (13) and the support frame (14) are respectively comprised, when the support platform (13) and the support frame (14) are in the extended configuration.

## Description

### TECHNICAL FIELD

The present invention relates in general to a folding ladder for road vehicles, in particular for industrial road vehicles such as articulated trucks and semitrailers, and commercial road vehicles such as vans and trucks. Specifically, the present invention relates to a folding ladder for road vehicles which is particularly stable and safe, but simultaneously light and slender.

### BACKGROUND

Nowadays, several folding ladder solutions are known, used in road vehicles for climbing up or down from the vehicle loading bed. Such ladders are generally constrained to elements of the vehicle chassis at the rear side, where the chassis supports the loading bed, and in particular between such a bed and other elements at the rear of the vehicle such as the bumper or, where present, the lifting platform. Because of the size and weight of the currently known ladders, and consequently because of the type of permanent fastening adopted, it is difficult to envisage an alternative positioning over time with respect to the known rear position, such as laterally with respect to the vehicle bed.

Typically, a folding ladder for road vehicles is connected to the vehicle chassis, by means of a load-bearing structure thereof, in a fixed manner, and an extractable operating part which is at least partially movable, so as to be able to assume an extended operating configuration, in which the ladder allows use for access to the bed, and a non-operating configuration, folded and inserted, in which, taking up less space, it can be stored in a dedicated storage structure and which typically corresponds to the same load-bearing structure permanently fixed below the bed. The extractable part usually comprises one or more steps constrained to a frame, which in use remains suspended from a landing platform, when present. The landing platform and folding ladder frame can generally slide telescopically within a guide element which typically coincides with the load-bearing and containment structure constrained to the chassis and below the vehicle bed. In the telescopically folded configuration, the ladder remains contained in the load-bearing and containment structure. The extraction of the folding ladder from the structure usually occurs manually.

A first known type of folding ladder for vehicles includes a plurality of rung steps. Such ladders are often made so as to assume, in their operating configuration, a substantially vertically suspended arrangement, constrained to the vehicle bed, with the steps hanging and substantially overlapping vertically. The suspended, vertical arrangement minimises the bending load to which the ladder is subjected, allowing the use of slender, lightweight structures, a requirement which is particularly felt nowadays due to the ever-increasing need to reduce the fuel consumption of transport means, and to maximise payload capacity. However, vertically placed rung ladders are particularly uncomfortable to use, especially when descending and/or during the loading and unloading of goods, which can impede movements or obstruct the operator's view, thus increasing the risk of injury to the operator.

A second known type of folding ladder for vehicles comprises a plurality of deep tread steps arranged such that the ladder assumes an inclined configuration in use. Such a type of ladder is particularly comfortable to use as, on the one hand, the operator can rest his or her foot on a generous surface which provides stability. Furthermore, the inclined arrangement also makes it easier for the operator to climb up and down, especially when moving goods, essentially eliminating the need for aids to hold on to in order to maintain balance. The disadvantage related to folding ladders for vehicles of the inclined, deep tread type lies in the dimensions thereof, due to the significant stresses to which they are subjected as a result of the cantilevered load. Such stresses are especially high at the connection line to the bed, which usually coincides with the ladder rotation hinge around which the structure rotates to pass from the extended configuration to the folded configuration. The folding ladders for vehicles of the inclined, deep tread type therefore generally comprise a double support chassis of the steps, possibly strengthened through thicker elements and with special reinforcement and trussing solutions, resulting in a heavier and more complex structure. Such complex structures can also lead to ergonomic difficulties when opening and closing, and can sometimes be a cause of injury. Moreover, given their kinematic complexity, they are more prone to seizing and malfunctions.

### OBJECTS AND SUMMARY OF THE INVENTION

In light of the above, the problem underlying the present invention is to devise a folding ladder for road vehicles which provides stability, safety, robustness and convenience in use, while having a slender, lightweight, versatile structure with extremely effective operation and efficient construction, assembly and use.

In the context of such a problem, an object of the present invention is to make a folding ladder for road vehicles which has a simple structure to facilitate assembly by a user.

A further object of the present invention is to devise a folding ladder for road vehicles which allows a high load to be carried without the risk of collapse, and is capable of stably maintaining its position during its use.

Still another object of the present invention is to devise a folding ladder for road vehicles operable in a simple manner, avoiding the risk of injury and ensuring safety in use.

A not least object of the present invention is to make a folding ladder for road vehicles which, in its folded configuration, occupies a minimum footprint such that it can be positioned and/or easily moved and repositioned, even on the side of a vehicle bed, by means of a quick coupling system to the chassis.

In accordance with its first aspect, the invention thus relates to a folding ladder for road vehicles, in particular industrial vehicles and commercial vehicles, comprising a plurality of foot support elements, the plurality of foot support elements comprising at least one substantially flat upper support platform and a support frame of at least one step and comprising at least one step, the support platform and the support frame being movable with respect to each other between a folded configuration, in which the support platform and the frame are arranged substantially coplanar, and an extended configuration, in which the support platform and the support frame are comprised in respective mutually inclined planes, and a containment structure configured to be constrained below to a support chassis of a road vehicle bed and to house the plurality of foot support elements, when the support platform and the support frame are in the folded configuration.

According to the present invention, the folding ladder comprises at least one prop element constrained to at least a first foot support element and to at least a second foot support element, such that the at least one prop element is configured to assume a first arrangement substantially coplanar to the foot support elements, when the support platform and the support frame are in the folded configuration, and an inclined and/or incident arrangement with respect to both planes in which the support platform and the support frame are respectively comprised, when the support platform and the support frame are in the extended configuration.

In the context of the present description and in the appended claims, a 'prop element' is understood as an element configured and structured such that the foot support elements are triangulated with each other so as to distribute over both elements the forces and moments to which at least one of the elements is subject. The prop element can assume an elongated conformation, i.e., having a main extension along one extension direction, or be a substantially flat element.

In the context of the present description and in the appended claims, 'inclined planes' are intended to mean planes which are not coplanar, thus defining a non-zero angle therebetween, including a 90° angle.

The Applicant has identified that the prop element can be used to make a lightweight structure, which nevertheless offers solidity and high operations and safety in use, while stably maintaining the desired position once in the extended configuration.

In fact, by triangulating the foot support elements with each other, the prop element breaks down, reduces and distributes the forces in play, and simultaneously ensures both structural resistance and the maintenance of the extended position in a particularly stable condition, while at the same time allowing for a general rationalisation of the elements forming the ladder. Thereby, it is possible to eliminate the typical 'springiness' present in the known folding ladders for vehicles due to the local bending to which the ladder is typically subjected in use.

Furthermore, the solution according to the invention requires less contour structure and allows, for the same overall footprint, a greater width and depth of the steps and support platform.

Furthermore, the reduced need for a contour structure allows a considerable reduction in weight so that the ladder thus lightened is highly manageable. This not only facilitates the installation and use of the ladder, but also allows it to be easily moved and repositioned in other areas of the vehicle to access the pad from different accesses. Thereby, it is conceivable to design special quick coupling systems to the chassis, which allow the ladder to be quickly constrained to the vehicle in a plurality of different positions.

In accordance with a second aspect thereof, the invention relates to a road vehicle comprising a support chassis of a bed characterised in that it comprises at least one structure for removably coupling a folding ladder for road vehicles and a folding ladder for road vehicles as described above, preferably positioned between the bed and the lateral protection device.

Advantageously, the road vehicle thus configured achieves the same advantages as described with reference to the folding ladder according to the invention.

The present invention may have at least one of the following preferred features; the latter may in particular be combined with one another as desired in order to meet specific application needs.

In a variant of the invention, the prop element is rotatably constrained to the at least a first foot support element and roto-translationally constrained to the at least a second foot support element.

Advantageously, the particular connection of the prop element to the foot support elements, which also allows the sliding thereof when closing the ladder to reach the folded configuration, makes it possible to severely limit the footprint occupied by the folded ladder.

In a variant of the invention, the support frame or support platform has at least one sliding slit and the at least one prop element has at least one roto-translational constraining element or sliding pin engaging such an at least one sliding slit.

Optionally, at least one sliding slit is made substantially at the centreline of the support frame or support platform.

Preferably, the at least one prop element is hinged to the support platform at a respective fixed pin and is roto-translationally constrained to the support frame, the support frame having the at least one sliding slit.

Preferably, two prop elements are comprised, each placed at one side of the support platform and the support frame, at the respective side walls.

More preferably, the support frame or the support platform has a sliding slit on each respective side wall.

Alternatively, the at least one prop element is shaped like a plate.

Preferably, the at least one plate-like prop element is constrained at both sides of the support platform and the support frame, at respective side walls, in which the support frame or support platform has a sliding slit at each respective side wall.

Advantageously, by using one or more prop elements constrained to slide in a slit, e.g., placed on the side of the ladder structure, it becomes possible to obtain the ladder easily and economically directly from a shaped and folded sheet metal element which integrates all the functions of the steps, the relative structure, as well as the slit which interacts with the prop element, also defines the relative limit switches thereof.

In an alternative variant, the prop element comprises at least two parts rotatably connected to each other, the first prop part being rotatably connected to the at least a first foot support element and the second prop part being rotatably connected to the at least a second foot support element.

In a variant of the invention, the containment structure defines a sliding plane along which the plurality of foot support elements is constrained to telescopically slide between two end positions.

Advantageously, the reduced thicknesses given by the slender ladder structure in combination with its telescopic compaction allow to minimise the dimensions occupied by the ladder in the folded configuration, and the weight, enabling it to be positioned and/or transferred, even laterally with respect to a road vehicle. For example, it is possible to constrain the containment structure between the vehicle bed and a lateral protection device of the type described in patent application No. 102020000005656 of the same Applicant.

In a variant of the invention, in the vicinity of a constraining point to the support platform, the at least one prop element is shaped so as to define a support plane against the containment structure for unloading at least part of the load to which the prop element is subjected.

Advantageously, this relieves the load unloaded on the constraining point at the support platform.

In a variant of the invention, the containment structure comprises a pair of lateral guides constrained to each other in a fixed, spaced apart and parallel manner so as to define the sliding plane therebetween, the lateral guides defining two opposing sliding seats facing each other towards the sliding plane, in the sliding seats engaging respective sliding constraining elements projecting in opposite directions from respective side walls of the support platform and extending in the sliding plane.

Preferably, the lateral guides are mutually connected through a pair of transverse elements, each arranged substantially at one end of the lateral guides to form a closed perimeter structure, the transverse elements comprising a first rear transverse element placed substantially at a first end of the lateral guides, and a second front transverse element placed substantially at a second end of the lateral guides.

Advantageously, the creation of the containment structure through the lateral guides and the transverse elements allows to obtain an open-frame structure, offering lightness to the ladder as a whole.

More preferably, each lateral guide comprises an elongated projection projecting from the respective lateral guide towards the other lateral guide, and the support platform comprises a pair of slotted recesses made in its own rear wall, the recesses each defining a sliding guide which engages a corresponding elongated projection of a lateral guide.

Advantageously, the additional guide provided by the rear wall of the support platform allows to reduce the load exerted on the constraining elements between the support platform and the lateral guides, giving the structure greater strength and stability overall.

In a variant of the invention, the support frame is constrained near a side thereof to the support platform in a rotatable manner about a rotation axis A.

In a variant of the invention, the support frame and the at least one step are obtained from a single piece of sheet metal.

Alternatively, the at least one step is constrained to the support frame.

In a variant of the invention, the support frame comprises side walls each defining a sliding guide within which a respective further roto-translational constraining element or sliding pin engages, projecting laterally from a respective side wall of the support frame.

Such a solution conveniently allows to make a folding ladder with greatly reduced footprint in a folded configuration, in which the foot support elements cannot only be carried in a substantially coplanar configuration, occupying very little space in height, but also be compacted telescopically, reducing the dimensions in length.

Preferably, the at least one prop element has a socket made so as to overlap the sliding guide when the at least one prop element is in the first configuration substantially coplanar with the foot support elements.

In a variant of the invention, the support platform and/or the at least one step constrained to the support frame define a support surface comprising a plurality of voids and/or finned projections.

Advantageously, such a creation increases the friction exerted by the foot support elements, offering greater stability and safety in use.

In a variant of the invention, a locking assembly is comprised for retaining the plurality of foot support elements within the containment structure.

Conveniently, the locking assembly prevents accidental opening of the folding ladder while driving the vehicle.

Preferably, the locking assembly comprises at least one pair of elements configured to snap engage with each other to exert a retaining action between the foot support member and the containment structure, a first element of the pair of snap engagement elements being constrained to the foot support element and a second element of the pair of snap engagement elements being constrained to the containment structure.

More preferably, the locking assembly comprises at least one shaped projection made on at least one of the foot support element and the containment structure, configured to cooperate with a respective slot made on at least one of the containment structure and a foot support element to exert a retaining action between the foot support element and the containment structure.

Even more preferably, the shaped projection is shaped like a hook.

Advantageously, when the projection is inserted in the slot, an accidental sliding of the foot support elements extracting from the containment structure can be prevented.

Preferably, the locking assembly comprises at least one elastic element configured to exert an elastic thrust on the set of foot support elements along a sliding direction.

Advantageously, the at least one elastic element ensures that the projections do not exit from the slots.

More preferably, the locking assembly comprises a fastening element made in the form of an elastic hook, which can be inserted in a hole made on the projection.

In a variant of the invention, the road vehicle comprises a bed having a side edge and at least one of a lateral protection device connected to the support chassis so as to extend below the side edge of the bed in a configuration substantially perpendicular to the bed, and a bumper connected to the support chassis so as to extend below the side edge of the bed, where the at least one coupling structure is constrained to the support chassis at the lateral protection device and/or the bumper and is interposed between the bed and the lateral protection device and/or the bumper.

In a variant of the invention, the coupling structure comprises a pair of profiles configured to be connected below the bed.

Preferably, each profile comprises a sliding surface which ends at a retaining portion configured to retain a lateral guide of the folding ladder.

Preferably, at least one of the two profiles comprises an elastically movable projection configured to releasably engage in a corresponding hole on a corresponding lateral guide of the folding ladder.

### BRIEF DESCRIPTION OF THE DRAWINGS

Further features and advantages of the present invention will be more evident from the following detailed description of certain preferred embodiments thereof made with reference to the appended drawings.

The different features in the individual configurations may be combined with one another as desired according to the preceding description, should there be advantages specifically resulting from a specific combination.

In such drawings,
- figures 1a and 1b are perspective views of a folding ladder for road vehicles according to a preferred embodiment of the present invention in a folded condition, from above and below, respectively;
- figure 1c is an enlarged detail of figure 1b;
- figures 2a and 2b are perspective views from above of the folding ladder of figure 1 in partially extended configuration and maximum telescopic compaction and maximum telescopic extension, respectively;
- figure 3 is an exploded front view of the folding ladder of figure 1a;
- figure 3a is an enlarged detail of figure 3;
- figure 4 is an exploded rear view of the folding ladder of figure 1a;
- figure 4a is an enlarged detail of figure 4;
- figure 5 is a partial sectional view of a construction detail of the folding ladder of figure 1a;
- figure 6 is a perspective view from above the folding ladder of figure 1a in a fully extended configuration;
- figure 7 is a partially transparent side elevation view of the folding ladder of figure 6;
- figure 7a is an enlarged detail of figure 7;
- figure 8 is a perspective view from above of the coupling structure for constraining a folding ladder according to the present invention to the vehicle;
- figure 9 is a side elevation view of a road vehicle mounting a folding ladder for road vehicles according to the present invention at a lateral protection device or, alternatively, at the bumper; and
- figure 10 is a front perspective view of the folding ladder for road vehicles and the lateral protection device of the road vehicle of figure 9.

### DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. It is in any case to be noted that there is no intention to limit the invention to the specific embodiment illustrated rather on the contrary, the invention intends covering all the modifications, alternative and equivalent constructions that fall within the scope of the invention as defined in the claims.

The use of "for example", "etc.", "or" indicates non-exclusive alternatives without limitation unless otherwise indicated. The use of "comprises" and "includes" means "comprises or includes, but not limited to", unless otherwise indicated.

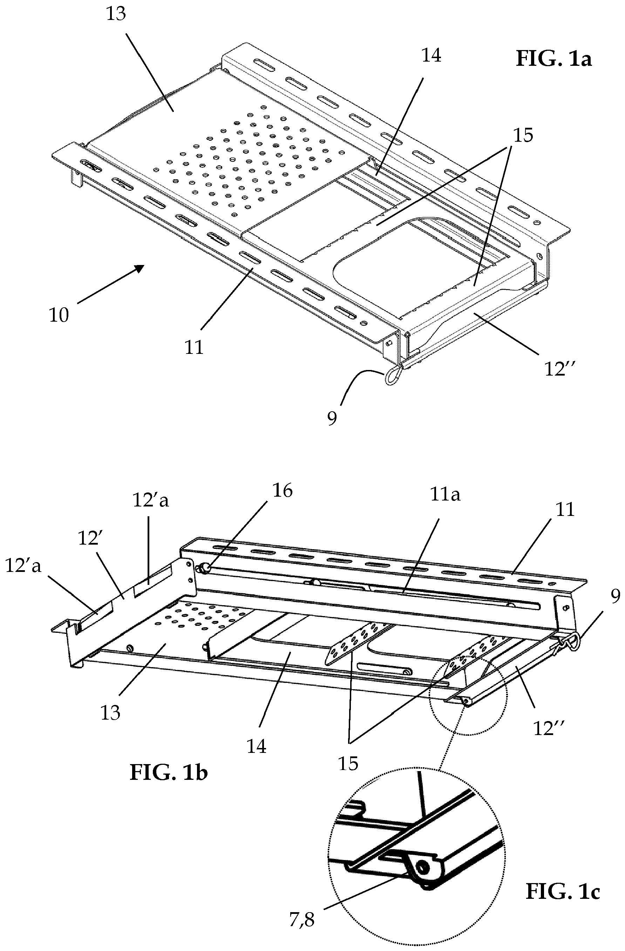

With reference to figures 1a-7, a preferred embodiment of a folding ladder for road vehicles according to the present invention is illustrated, referred to overall as 10.

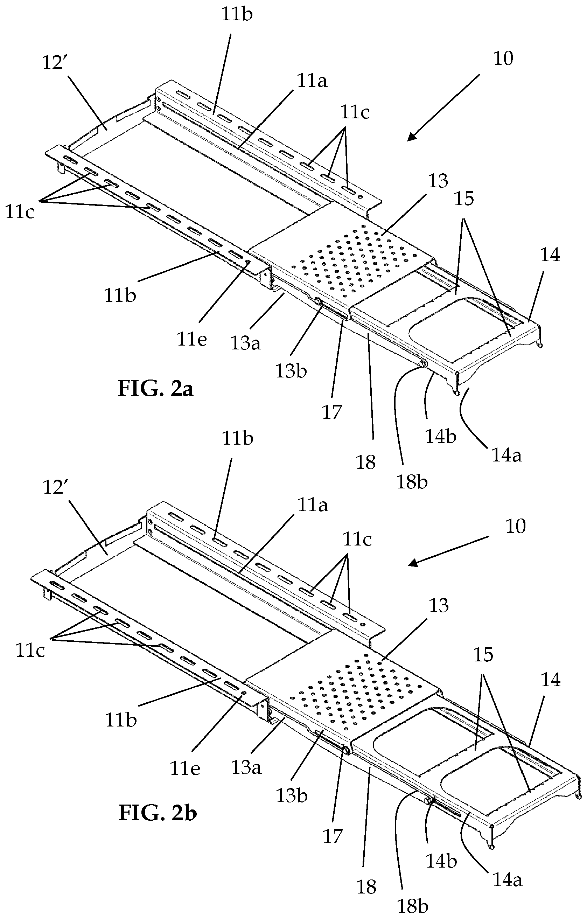

The folding ladder 10 comprises a containment structure 11,12',12" preferably made open, specifically provided with only perimeter frame elements. The containment structure comprises a pair of lateral guides 11 constrained to each other in a fixed, spaced apart and parallel manner so as to define a sliding plane therebetween. In particular, the lateral guides 11 define two sliding seats 11a, one of which is shown as an example in Figs. 2a and 2b, opposing and facing each other towards the sliding plane.

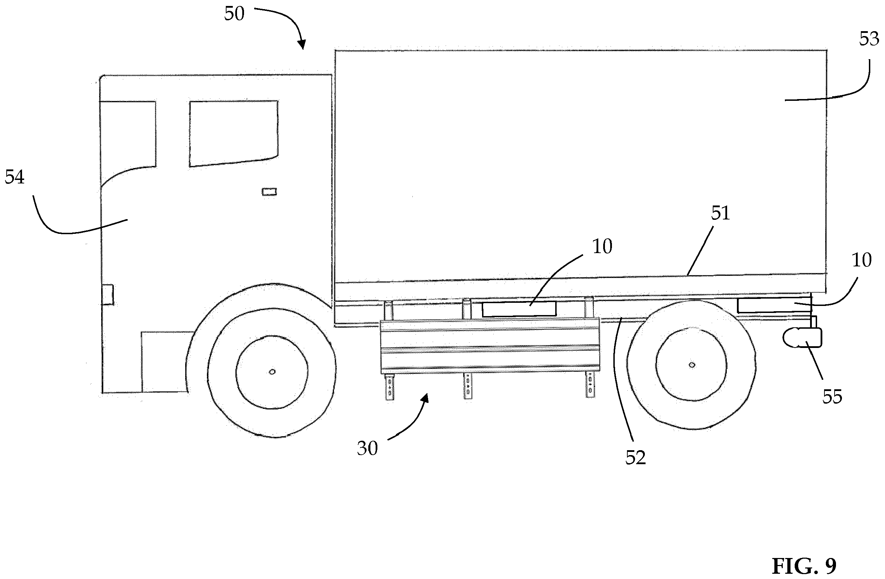

In the embodiment illustrated, each lateral guide 11 is made by a profile element 11b slitted at an upper surface, thus comprising a plurality of fastening slits 11c above. The fastening slits 11c provided above the lateral guides 11 are configured to allow the containment structure 11,12 to be constrained below a bed 51 of a vehicle 50, illustrated in Fig. 9, e.g., to enable the constraint to a support chassis 52 of the bed 51 of the vehicle 50. Alternatively, the constraint to the chassis can be achieved by inserting the containment structure 11,12',12" in a coupling structure 20 previously fastened to the vehicle 50 and better described below.

The lateral guides 11 are mutually connected through a pair of transverse elements 12',12", each arranged substantially at one end of the lateral guides 11 to form a peripherally closed structure. In the specific embodiment illustrated, the transverse elements 12',12" are arranged orthogonal to both lateral guides 11. The transverse elements comprise a first rear transverse element 12', which, together with the sliding seat 11a, acts as a stop abutment, placed at a first end of the lateral guides 11, and a second front transverse element 12", placed at a second end of the lateral guides 11.

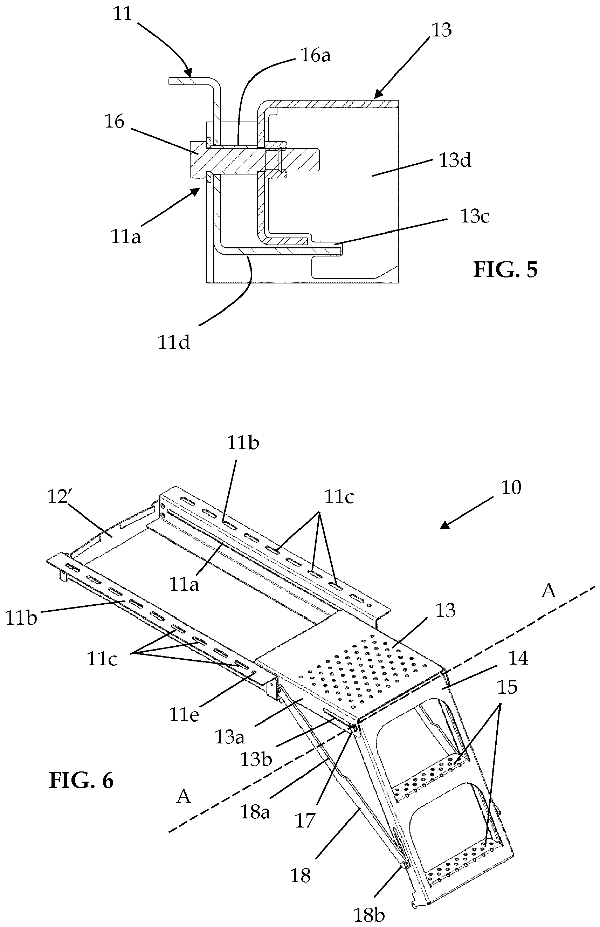

In the space defined between the lateral guides 11, at least a first 13 and a second 14,15 foot support element are arranged, specifically an upper support platform 13 and a support frame 14 of a plurality of steps 15 clearly visible in Fig. 6. The support frame 14 and the upper support platform 13 both have an extension substantially contained in one plane and, in the folded configuration, the containment planes from the support frame 14 and the upper platform 13 respectively assume a mutually coplanar arrangement and comprised in the sliding plane shown in Figs. 1a, 1b, 2a and 2b.

In the embodiment illustrated, the support frame 14 and the plurality of steps 15 are obtained from a single piece of sheet metal. Furthermore, the upper platform 13 and the steps 15 have a plurality of holes and possibly finned projections, obtained for example by embossing and/or punching, to increase the friction exerted in use.

In particular, as illustrated in Figs. 2a and 2b, the at least a first 13 and a second 14,15 foot support element are directly or indirectly constrained to the lateral guides 11 in a sliding manner, so as to slide along a sliding direction while remaining substantially coplanar to the sliding plane. In particular, the at least a first 13 and a second 14,15 foot support element slide within the sliding plane between a maximum insertion position, shown in Figs. 1a and 1b, and a maximum extraction position, shown in Fig. 2b. In the illustrated embodiment, the upper platform 13 and the support frame 14 are also configured to slide telescopically with respect to each other within the sliding plane. In this respect, Fig. 2a shows the first 13 and the second 14,15 foot support element in maximum telescopic compaction configuration, while Fig. 2b shows the first 13 and the second 14,15 foot support element in maximum telescopic extension configuration.

The folding ladder 10 additionally comprises a locking assembly 7,8,9,12'a configured to firmly secure the at least a first 13 and a second 14,15 foot support element within the space defined by the containment structure 11,12',12", when these 13,14,15 are in the folded configuration shown in Figs. 1a and 1b. In particular, the locking assembly 7,8,9,12'a comprises at least one projection 7 which, as can be seen in Fig. 1c, cooperates with a respective slot 8. When the projection 7 is inserted in the slot 8, the sliding of the foot support elements 13,14,15 in extraction from the containment structure 11,12',12" is prevented.

In the embodiment illustrated, two hooked projections 7 are included, made on the support frame 14, and two corresponding slots made on the front transverse element 12". Furthermore, the rear transverse element 12' comprises a pair of elastic elements 12'a which exert an elastic thrust on the set of foot support elements 13,14,15 along the sliding direction, thereby ensuring that the projections 7 do not exit from the slots 8.

Last but not least, a fastening element 9 is included for retaining the at least a first 13 and a second 14,15 foot support element within the space defined by the containment structure 11,12',12". In the embodiment illustrated, the fastening element 9 is made in the form of an elastic hook, which can be inserted in a hole made on the projection 7.

In a completely equivalent manner, it is possible to make the slots on the lateral guides 11 instead of the transverse element 12". Similarly, the projections on the containment structure 11, 12',12" and the slots on the foot support elements 13,14,15 can be made.

In order to allow sliding, in the embodiment illustrated, the upper platform 13 comprises a pair of sliding constraining elements 16, shown in Figs. 1b, 5 and 7, each projecting from a side wall 13a from the upper platform 13 in the opposite direction and extending in the sliding plane. In the embodiment illustrated, the sliding constraining elements are made in the form of sliding rods and are provided with spacing elements 16a. 'Side walls' 13a of the upper platform 13 are understood as the walls of the upper platform 13 facing the lateral guides 11 of the containment structure 11,12. The sliding bars 16 each engage a respective sliding seat 11a defined by the lateral guides 11. The spacing elements 16a ensure that a free space is maintained between the lateral guides 11 and the upper platform 13 and at the same time ensure sliding strongly aligned with the sliding direction, preventing jamming of the ladder while extracting or closing it.

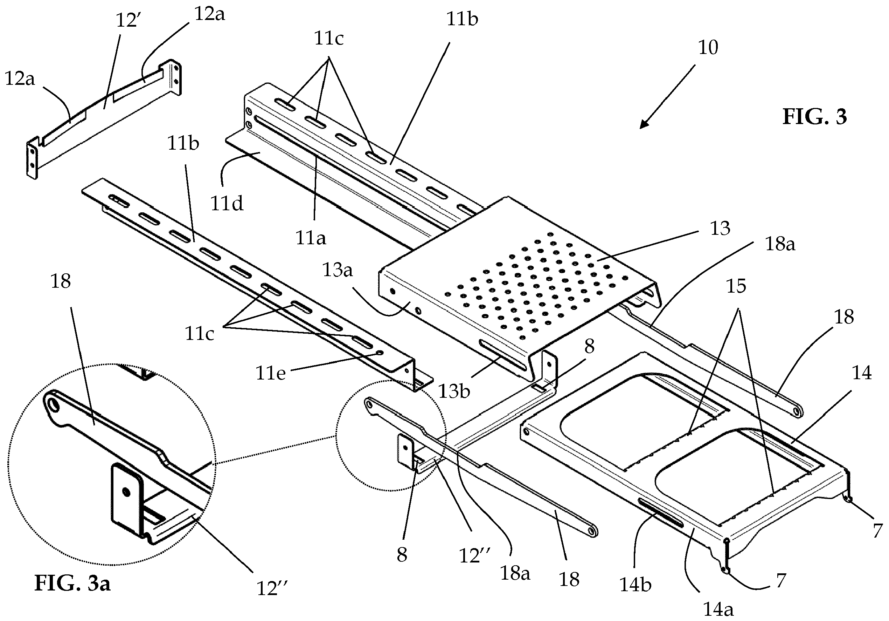

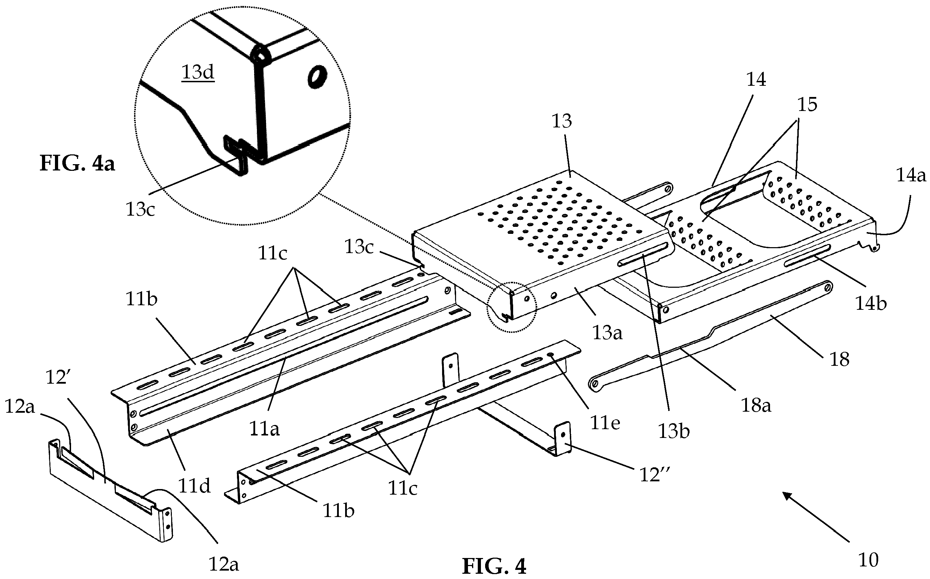

In the embodiment illustrated, the upper platform 13 comprises a pair of slotted recesses 13c made in its rear wall 13d, as illustrated in detail in Figs. 4a and 5. The recesses 13c each define a guide which engages a corresponding elongated projection 11d, made in the lateral guides 11 and which, as shown in Figs. 3 and 4, extends substantially for the entire extension thereof. The engagement of the projection 11d in the respective guide defined by the recess 13c allows to reduce the load exerted on the sliding constraining elements 16, giving the overall structure greater strength and stability.

The support frame 14 is constrained near its own side to the upper platform 13 rotatably about a rotation axis A, illustrated in Fig. 6, so as to assume, in the extended configuration, a mutually inclined arrangement, possibly even orthogonal. Specifically, the planes outlined respectively by the support frame 14 and the upper platform 13 assume a mutually inclined arrangement, e.g., inclined at an angle between 5° and 90°.

In particular, each side wall 13a of the upper platform 13 defines a sliding guide 13b within which it engages a respective roto-translational constraining element 17, made in the form of a sliding pin, laterally projecting from a side wall 14a of the support frame 14. Also in this case, 'side walls 14a' of the support frame are understood as the walls of the support frame facing the lateral guides 11 of the containment structure 11,12 when the latter is inserted in the containment structure 11,12. The sliding pin 17 is preferably made in a similar manner to the sliding rods 16 shown in Fig. 5, having a spacing element (not shown) configured to ensure sliding strongly aligned to the sliding direction.

In a completely equivalent manner, in an alternative embodiment not illustrated, the support frame 14 has a pair of sliding guides made in its side walls 14a, in each of which a respective sliding pin engages which extends below the support plane defined by the upper platform 13, orthogonally to the side walls 13a thereof.

Advantageously, the first 13 and the second 14,15 foot support element are both rotatably connected to at least one prop element 18, preferably substantially at a respective end of the at least one prop element 18. The at least one prop element 18 is also connected in a sliding manner tone of the two foot support elements 13,14,15, for example by being constrained to slide within a sliding slit.

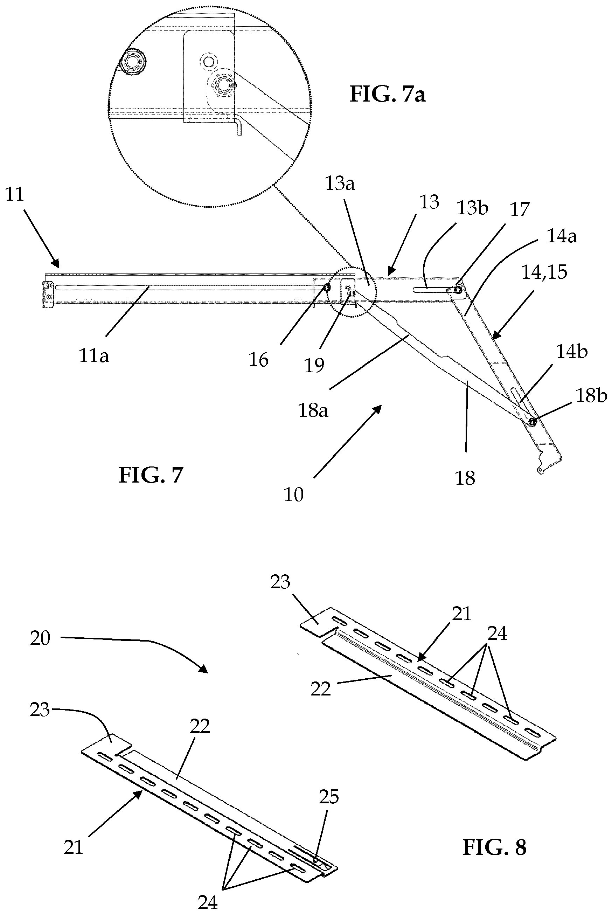

Specifically in the embodiment illustrated, two prop elements 18 are included, each placed at one side of the first 13 and the second 14,15 foot support element, at the respective side walls 13a,14a. As illustrated in Figs. 6 and 7, each of the two prop elements 18 is hinged to the upper platform 13 at a fixed pin 19 and is roto-translationally constrained to the support frame 14, the latter having respective sliding slits 14b, one on each side wall 14a of the frame 14, and the prop elements 18 having respective second roto-translational constraining elements 18b or second sliding pins which engage in such sliding slits 14b.

In an alternative embodiment not illustrated, the at least one prop element 18 is hinged to the support frame 14 and roto-translationally constrained to the upper platform 13.

The rotatable and roto-translatable constraints at the ends of the at least one prop element 18 are such as to allow the at least one prop element 18 to assume a first configuration substantially coplanar to both foot support elements 13,14,15 when these are in the substantially coplanar arrangement to the sliding plane, and a configuration inclined and/or incident to both planes outlined by the foot support elements 13,14,15, when these are in the mutually inclined arrangement.

The at least one prop element 18 preferably has a socket 18a which allows the sliding guide 13b to be left free, thereby not hindering the sliding of the roto-translational constraining element 17 between the support wall 13 and the support frame 14 during the telescopic sliding of the one 14 with respect to the other 13.

As visible in Fig. 7a, in the vicinity of its fixed pin 19, the prop element 18 is shaped so as to define a plane which cooperates with the front transverse element 12" to unload part of the load to which the prop element 18 is subjected. This thereby relieves the load unloaded on the fixed pin 19.

Furthermore, Fig. 3a shows a shaping of the front transverse element 12" such that it cooperates with the prop element 18 in the substantial absence of clearance which could lead to involuntary retractions or movements of the ladder in use. In particular, the shaping of the front transverse element 12" is configured to prevent the sliding constraining elements 16 of the upper platform 13 from retracting in the sliding seats 11a.

According to a preferred embodiment, the folding ladder 10 can be constrained to a coupling structure 20 illustrated in Fig. 8. The coupling structure 20 comprises a pair of profiles 21 provided with slits 24 for connecting below a bed 51 of a vehicle 50, for example to the support chassis 52 of the bed 51 of the vehicle 50.

The profiles 21 comprise a sliding surface 22 which ends at a retaining portion 23, raised with respect to the sliding surface 22, so as to define a locking seat by interference. In particular, the coupling structure 20 is configured to make the guides 11 slide on the sliding surface 22 until they reach the locking seat, at the retaining portion 23. At least one of the two profiles 21 further comprises a projection 25 which is elastically movable and configured to releasably engage in a corresponding hole 11e in the lateral guides 11.

This thereby makes it possible to connect the containment structure 11,12',12" of the ladder 10 to the coupling structure 20 in a stable, yet simple and quick manner. Furthermore, the release of the containment structure 11,12',12" from the coupling structure 20 is also particularly convenient to perform. It is therefore possible to provide a plurality of coupling structures 20 constrained to the vehicle in as many positions where it is convenient to use the ladder according to the invention. Thereby, the ladder 10 can be easily removed from a coupling structure 20 to be inserted in a different coupling structure 20, thus allowing the ladder to be moved and used in the most convenient position.

According to a preferred embodiment illustrated in Fig. 9, in a road vehicle 50 there are at least two coupling structures 20 of the folding ladder 10 according to the invention, of which a first mounted laterally to the vehicle 50 and in particular, above a lateral protection device 30 connected to the bed 51 of the vehicle 50, and a second mounted at the rear of the vehicle 50 and in particular, above a bumper 55 connected to the bed 51. Specifically, the vehicle of figure 9 is a truck 50 comprising a cabin 54 and a chassis 52 on which a load space 53 is arranged, terminated below by the bed 51 which supports the lateral protection device 30, the bumper 55 and the coupling structures 20. Thereby, the folding ladder 10 according to the invention can be transferred from one support structure 20 to another as required.

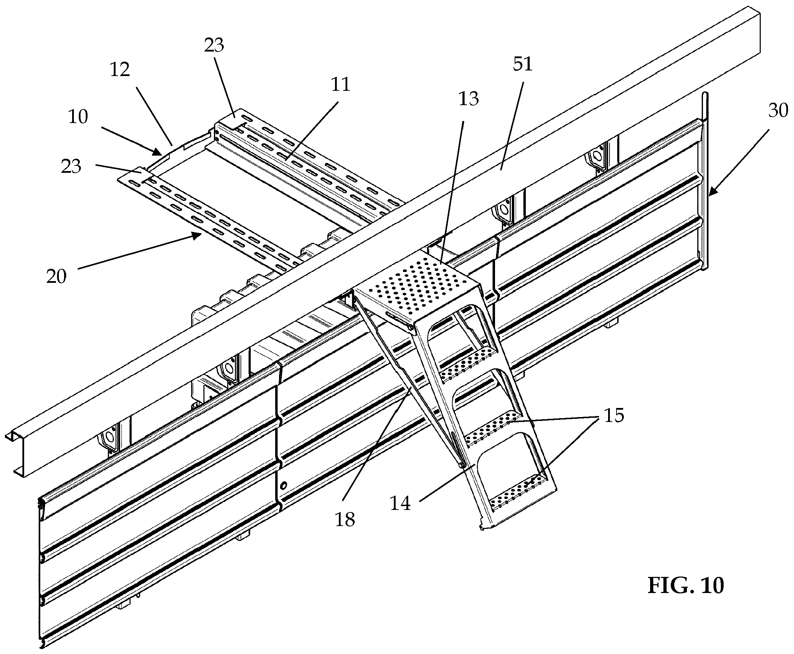

Figure 10 shows in detail a lateral protection device 30 with the coupling structure 20 mounted thereon, in which the folding ladder 10 according to the invention is inserted. In particular, the lateral protection device 30 is of the type described in patent application No. 102020000005656 filed in the name of the same Applicant.

## Claims

1. Folding ladder (10) for road vehicles, in particular industrial vehicles and commercial vehicles, comprising:
- a plurality of foot support elements (13,14,15), the plurality of foot support elements (13,14,15) comprising at least one substantially flat upper support platform (13) and a support frame (14) of at least one step (15) and comprising at least one step (15), the support platform (13) and the support frame (14) being movable with respect to each other between a folded configuration, in which the support platform (13) and the support frame (14) are arranged substantially coplanar, and an extended configuration, in which the support platform (13) and the support frame (14) are comprised in respective inclined planes with respect to each other, and
- a containment structure (11,12',12") configured to be constrained below to a support chassis (52) of a bed (51) of a road vehicle (50) and to house the plurality of foot support elements (13,14,15), when the support platform (13) and the support frame (14) are in the folded configuration,
**characterised in that** it comprises at least one prop element (18) constrained to at least a first foot support element (13,14,15) and at least a second foot support element (13,14,15), such that the at least one prop element (18) is configured to assume a first arrangement substantially coplanar to the foot support elements (13,14,15), when the support platform (13) and the support frame (14) are in the folded configuration, and an inclined and/or incident arrangement with respect to both planes in which the support platform (13) and the support frame (14) are respectively comprised, when the support platform (13) and the support frame (14) are in the extended configuration.

2. Folding ladder (10) according to claim 1, wherein the prop element (18) is rotatably constrained to the at least a first foot support element (13,14,15) and roto-translationally constrained to the at least a second foot support element (13,14,15).

3. Folding ladder (10) according to claim 1 or 2, wherein the support frame (14) or the support platform (13) has at least one sliding slit (14b) and the at least one prop element (18) has at least one roto-translational constraining element (18b) engaging said at least one sliding slit (14b), and, preferably, wherein the at least one prop element (18) is hinged to the support platform (13) at a respective fixed pin (19) and is roto-translationally constrained to the support frame (14), the support frame bearing the at least one sliding slit (14b).

4. Folding ladder (10) according to any one of the preceding claims, comprising two prop elements (18) each placed at one side of the support platform (13) and the support frame (14), at respective side walls (13a,14a), wherein, preferably, the support frame (14) or the support platform (13) has a sliding slit (14b) at each respective side wall (13a,14a).

5. Folding ladder (10) according to any one of the preceding claims, wherein, near a constraining point to the support platform (13), the at least one prop element (18) is shaped to define a support plane against the containment structure (11,12',12") to unload at least part of the load to which the prop element (18) is subjected.

6. Folding ladder (10) according to any one of the preceding claims, wherein the containment structure (11,12',12") defines a sliding plane along which the plurality of foot support elements (13,14,15) are constrained to slide telescopically between two end positions, and wherein, preferably, the containment structure (11,12',12") comprises a pair of lateral guides (11) constrained to each other in a fixed, spaced apart and parallel manner so as to define the sliding plane therebetween, the lateral guides (11) defining two opposing sliding seats (11a) facing each other towards the sliding plane, in the sliding seats (11a) engaging respective sliding constraining elements (16) projecting in the opposite direction from respective side walls (13a) of the support platform (13) and extending in the sliding plane.

7. Folding ladder (10) according to claim 6, wherein each lateral guide (11) comprises an elongated projection projecting from the respective lateral guide (11) towards the other lateral guide (11) and the support platform (13) comprises a pair of slotted recesses (13c) made in a rear wall (13d) thereof, the recesses (13c) each defining a sliding guide engaging a corresponding elongated projection (11d) of a lateral guide (11).

8. Folding ladder (10) according to any one of the preceding claims, wherein the support frame (14) is constrained near one of its sides to the support platform (13) rotatably about a rotation axis (A) and slidingly with respect to the support platform (13), and wherein, preferably the support platform (13) comprises side walls (13a) each defining a sliding guide (13b) within which engages a respective further roto-translational constraining element (17) projecting laterally from a respective side wall (14a) of the support frame (14) and wherein, preferably, the at least one prop element (18) has a socket (18a) made so as to overlap the sliding guide (13b) when the at least one prop element (18) is in the first configuration coplanar to the foot support elements (13,14,15).

9. Folding ladder (10) according to any one of the preceding claims, comprising a locking assembly (7,8,9,12'a) for retaining the plurality of foot support elements (13,14,15) within the containment structure (11,12',12").

10. Road vehicle (50) comprising a support chassis (52) of a bed (51), **characterised in that** it comprises at least one coupling structure (20) for removably coupling a folding ladder (10) for road vehicles constrained to the support chassis (52) and a folding ladder (10) for road vehicles according to any one of the preceding claims.

11. Road vehicle (50) according to claim 10, comprising a bed (51) having a side edge and at least one of a lateral protection device (30) connected to the support chassis (52) so as to extend below the side edge of the bed (51) in a configuration substantially perpendicular to the bed, and a bumper (55) connected to the support chassis (52) so as to extend below the side edge of the bed (51), wherein the at least one coupling structure (20) is constrained to the support chassis (52) at the lateral protection device (30) and/or the bumper (55) being interposed between the bed (51) and the lateral protection device (30) and/or the bumper (55).
